# EUROPÄISCHE PATENTSCHRIFT

(11) **EP 0 818 075 B1**
(45) Veröffentlichungstag und Bekanntmachung des Hinweises auf die Patenterteilung: **12.05.1999**
(21) Anmeldenummer: 96907993.8
(22) Anmeldetag: 28.03.1996
(51) Int. Cl.: H02H 1/00, G02B 6/44

(54) **DETEKTOR FÜR STÖRLICHTBÖGEN IN SCHALTANLAGEN ZUR VERTEILUNG ELEKTRISCHER ENERGIE**
ACCIDENTAL ARC DETECTOR FOR ELECTRIC POWER DISTRIBUTION SWITCHING EQUIPMENTS
DETECTEURS D'ARCS ACCIDENTELS SE PRODUISANT DANS DES INSTALLATIONS DE COMMUTATION UTILISEES POUR LA DISTRIBUTION D'ENERGIE ELECTRIQUE

(30) Priorität: 30.03.1995 DE 29505362 U
(43) Veröffentlichungstag der Anmeldung: 14.01.1998
(73) Patentinhaber: Klöckner-Moeller GmbH, 53115 Bonn (DE)
(72) Erfinder: SCHUMACHER, Andreas, D-53547 Dattenberg (DE); BOROS, Ferenc, D-53819 Neunkirchen-Seelscheid (DE)
(86) Internationale Anmeldenummer: DE9600543
(87) Internationale Veröffentlichungsnummer: WO9630987

(56) Entgegenhaltungen:
- EP-A- 0 063 506
- WO-A-88/08217

## Beschreibung

Die Erfindung betrifft einen Detektor nach dem Oberbegriff des Anspruches 1. Die internationale Patentanmeldung WO 88/08217 offenbart einen Detektor mit den im Obergriff des Anspruchs 1 definierten Merkmalen.

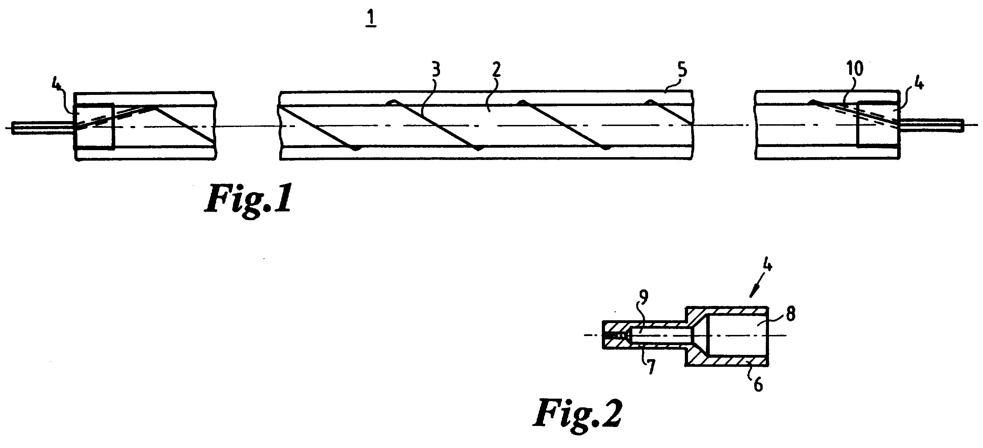

Ein Lichtwellenleiter-Störlichtbogendetektor ist durch die DD 271 397 A1 bekannt gemacht worden. Dieser ist in der Nähe von Stromsammelschienen ohne besondere Halterungen angeordnet. In der Fig. 2 liegt der Lichtwellenleiter-Störlichtbogendetektor auf beiden Schmalseiten einer Stromschiene mit rechteckförmigen Querschnitt auf. Es ist jedoch nicht näher beschrieben, wie der Lichtwellenleiter auf der Stromschiene befestigbar ist. In der Fig. 3 der eingangs genannten Schrift wird der Lichtwellenleiter um die Stromschiene gewickelt. Bei dieser Anordnung besteht die Gefahr, das der Lichtwellenleiter, insbesondere an den Berührungsstellen bzw. im Bereich der Stromschienenkanten, brechen kann. Weiterhin wird hierdurch die Kontaktierungsfläche der Stromschiene stark eingeschränkt.

Das direkte Aufliegen des Lichtwellenleiters ist zusätzlich von Nachteil, wie näher in der DE 43 31 716 beschrieben ist. In dieser Schrift sind ebenfalls verschiedene Anordnungen eines Lichtwellenleiter-Störlichtbogendetektors gezeigt und beschrieben.

In Fig. 1 ist eine Anordnung gezeigt, bei der der Lichtwellenleiter im wesentlichen senkrecht angeordnet und um die drei Stromschienen gewickelt ist. Bei dieser Anordnung ist nachteilig, daß der Abstand zum Entstehungsort eines Störlichtbogens unterschiedlich sein kann, bzw. daß der Lichtbogen nicht immer in der Nähe des Detektors entsteht.

Bei einer in der Fig. 3 gezeigten mäanderförmigen Anordnung kann zwar letzteres nicht auftreten, es besteht jedoch die Gefahr, wie bei allen anderen Anordnungen auch, daß der relativ dünne und schlecht sichtbare Lichtwellenleiter bei Montage- oder sonstigen Arbeiten beschädigt wird.

Weiterhin wird vorgeschlagen, den Lichtwellenleiter auf Schottplatten und anderen, in Stromschienennähe vorhandene, ebene Anlagenteile anzuordnen, wobei die Befestigung des Lichtwellenleiters durch Aufkleben oder durch Befestigungselemente, wie Befestigungsösen oder Abstandshalter, erfolgen kann.

Hierbei besteht das Problem, daß nicht immer Schottplatten oder dergleichen in ausreichender Nähe vorhanden sind.

Aufgabe der Erfindung ist es deshalb, ein Detektor nach dem Oberbegriff des Anspruches 1 zu schaffen, der eine bruchsichere Verlegung des Lichtwellenleiters in einer Schaltanlage ermöglicht.

Die Aufgabe der Erfindung wird durch die kennzeichnenden Merkmale des Anspruches 1 gelöst, während in den Unteransprüchen besonders vorteilhafte Weiterbildungen der Erfindung gekennzeichnet sind.

Durch die Erfindung wird in einfacher Weise erreicht, daß der Lichtwellenleiter geschützt wird, wobei in nicht zu erwartender Weise die optischen Eigenschaften des Detektors nicht wesentlich beeinträchtigt werden.

Anhand der Zeichnung, in der ein Ausführungsbeispiel dargestellt ist, sollen die Erfindung, weitere Ausgestaltungen und Verbesserungen der Erfindung und weitere Vorteile näher beschrieben und erläutert werden.

Es zeigt:
- Fig. 1: eine Darstellung des Detektors und
- Fig. 2: eine Darstellung des Steckverbinders.

In der Fig. 1 ist der Detektor 1 gezeigt. Dieser besteht aus einem flexiblen Trägerstab 2 mit einem Durchmesser von etwa 4mm, einem Lichtwellenleiter 3, der wendelförmig um den Trägerstab 2 gewickelt ist und zwei an den Enden des Trägerstabes angeordnete Steckverbinder 4 zum Anschluß an optoelektronische Elemente. Weiterhin besteht der Detektor 1 aus einem über Trägerstab 2, Lichtwellenleiter 3 und Steckverbinder 4 übergezogenen licht- und UV-strahlungsdurchlässigen Schrumpfschlauch 5.

Der Schrumpfschlauch 5 weist in unmontierten Zustand einen größeren Durchmesser auf als der Durchmesser des Trägerstabes 2. Durch Wärmeeinwirkung verkleinert sich der Durchmesser des Schrumpfschlauches, derart, daß der zwischen Trägerstab 2 und Schrumpfschlauch 5 angeordnete Lichtwellenleiter 3 geklemmt wird.
Der Lichtwellenleiter wird so vor mechanischer Beschädigung geschützt. Weiterhin wird die Lichtwellenleiteroberfläche nicht verschmutzt. Der Schmutz setzt sich auf der Oberfläche des Schrumpfschlauches 5 ab.

Der Schrumpfschlauch 5 kann auf der ganzen Länge perforiert sein.

Die beiden Steckverbinder 4 bestehen jeweils aus einem ersten Teilstück 6 und einem zweiten Teilstück 7.

Das erste Teilstück 6 weist einen Hohlraum 8 auf, in das das Trägerstabende eingeführt werden kann. Der Durchmesser des rotationssymmetrischen ersten Teiles 6 ist etwa 2 mm größer als der Durchmesser des Trägerstabes. Der Innendurchmesser des Hohlraumes 8 beträgt 4,2 mm, so daß der Trägerstab 2 mit einem Spiel von 0,2 mm eingeführt werden kann.

Das am äußeren Ende angeordnete zweite ebenfalls rotationssymmetrische Teilstück 7 ist mit einem erheblich kleineren Durchmesser versehen als das erste Teilstück 6. Dieser Durchmesser hängt von der Schraubfassung eines Optokoppleranschlusses ab.

Der Hohlraum 9 dieses Teilstückes 7 verjüngt sich zum Ende hin auf einen Durchmesser von etwa 0,3 mm, also etwa Lichtwellenleiterdurchmesser.

Der Lichtwellenleiter wird im Bereich der Steckverbinder 4 durch eine diagonal von der Außenfläche bis zum Mittelpunkt des Trägerstabes durchgehende Bohrung 10 geführt, so daß der Lichtwellenleiter an dem Ende parallel und zentrisch zum Trägerstab 4 verläuft.

### Liste der Bezugszeichen

Detektor 1
Trägerstab 2
Lichtwellenleiter 3
Steckverbinder 4
Schrumpfschlauch 5
Teilstück 6 (erstes)
Teilstück 7 (zweites)
Hohlraum 8,9
Bohrung 10

## Patentansprüche

1. Detektor (1) für Störlichtbögen in Schaltanlagen zur Verteilung elektrischer Energie, wobei der Detektor (1) aus mindestens einem Lichtwellenleiter (3) besteht, bei dem das von einem Störlichtbogen erzeugte und radial durch seine Ummantelung eingekoppelte Licht als Auslöse- oder Meldekriterium dient, wobei ferner der Lichtwellenleiter (3) in der Nähe von spannungsführenden Teilen angeordnet ist, **dadurch gekennzeichnet**, daß der Detektor (1) aus einem Trägerstab (2), einen wendelförmig um den Trägerstab (2) gewickelten Lichtwellenleiter (3), zwei an den Enden des Trägerstabes angeordneten Steckverbindern (4) zum Anschluß an optoelektronische Elemente besteht, und daß der Detektor (1) weiterhin aus einem über Trägerstab (2), Lichtwellenleiter (3) und Steckverbindern (4) übergezogenen licht- und UV-strahlungsdurchlässigen Schrumpfschlauch (5) besteht.

2. Detektor nach Anspruch 1, dadurch gekennzeichnet, daß die Steckverbinder (4) jeweils aus einem ersten Teilstück (6) und einem zweiten Teilstück (7) bestehen, daß das erste Teilstück (6) einen Hohlraum (8) aufweist, in das das Trägerstabende eingeführt werden kann, daß am äußeren Ende ein zweites Teilstück (7) vorhanden ist, das mit einem erheblich kleineren Durchmesser als das erste Teilstück (6) versehen ist und daß der Hohlraum (9) des zweiten Teilstückes (7) sich zum Ende hin auf einen Durchmesser von etwa Lichtwellenleiterdurchmesser verjüngt.

3. Detektor nach Anspruch 1 oder 2, dadurch gekennzeichnet, daß der Lichtwellenleiter (3) im Bereich des Steckverbinders (4) durch eine diagonal von der Außenfläche bis zum Mittelpunkt des Trägerstabes (2) durchgehende Bohrung (10) geführt ist, so daß der Lichtwellenleiter (3) an dem Ende parallel und zentrisch zum Trägerstab (4) verläuft.

4. Detektor nach einem der vorhergehenden Ansprüche, dadurch gekennzeichnet, daß der Trägerstab (2) flexibel ist.

## Claims

1. Detector (1) for stray arcs in switchgear for the distribution of electrical energy with the detector (1) consisting of at least one optical waveguide (3) in which the light emitted by a stray arc and coupled radially into the waveguide's jacket serves as a trigger or signal criterion, and, furthermore, with the optical waveguide being located close to voltage-carrying parts, **characterized in that** the detector (1) consists of one carrier rod (2), of an optical waveguide (3) wound around the carrier rod (2) like a helix, of two plug-and-socket connectors (4) arranged at the ends of the carrier rod in order to allow connection to optoelectronic elements, and in that the detector (1) further consists of a shrunk-fit sleeve (5) which covers the carrier rod (2), the optical waveguide (3), and the plug-and-socket connectors (4), and which is transparent to light and ultraviolet radiation.

2. Detector as claimed in claim 1, **characterized in that** the plug-and-socket connectors (4) each consist of a first section (6) and of a second section (7), in that the first section (6) presents a cavity (8) in which the end of the carrier rod can be inserted, in that a second section (7) exists at the external end having a considerably smaller diameter than the first section (6), and in that the cavity (9) of the second section (7) is tapered toward the end until reaching a diameter that is approximately equal to the optical waveguide's diameter.

3. Detector as claimed in claim 1 or 2, **characterized in that** the optical waveguide (3) passes a through bore (10) leading diagonally from the outside surface to the centre of the carrier rod (2) in the area of the plug-and-socket connector (4) in such a way that the optical waveguide (3) runs in parallel and centrically with regard to the carrier rod (4) at the end.

4. Detector as claimed in one of the above-mentioned claims, **characterized in that** the carrier rod (2) is flexible.

## Revendications

1. Détecteur (1) d'arcs électriques parasites dans des installations de distribution électrique, le détecteur (1) consistant en un guide d'ondes lumineuses (3) au moins, où la lumière produite par un arc électrique parasite et radialement comprise dans la gaine sert de critère de signalisation ou de déclenchement, le guide d'ondes lumineuses (3) étant en outre disposé à proximité de pièces conductrices de courant, **caractérisé en ce que** le détecteur (1) consiste en une tige porteuse (2), un guide d'ondes lumineuses (3) de forme hélicoïdale enroulé autour de la tige porteuse (2), de deux connecteurs à fiche (4) disposés aux extrémités de la tige porteuse pour le raccordement à des éléments optoélectroniques, et en ce que le détecteur (1) consiste en outre en une gaine rétractable (5) perméable à la lumière et au rayonnement U.V. recouvrant la tige porteuse (2), le guide d'ondes lumineuses (3) et les connecteurs à fiche (4).

2. Détecteur selon revendication 1, **caractérisé en ce que** les connecteurs à fiche (4) consistent chacun en un premier tronçon (6) et un second tronçon (7), en ce que le premier tronçon (6) présente une cavité (8) où l'extrémité de tige porteuse peut être insérée, en ce qu'un second tronçon (7) est présent à l'autre extrémité, pourvu d'un diamètre sensiblement inférieur à celui du premier tronçon (6), et en ce que la cavité (9) du second tronçon (7) se réduit vers son extrémité à un diamètre correspondant environ à celui du guide d'ondes lumineuses.

3. Détecteur selon revendication 1 ou 2, **caracterisé en ce que** le guide d'ondes lumineuses (3) est, dans la zone du connecteur à fiche (4), inséré dans un percement (10) pratiqué en diagonale de la surface extérieure au centre de la tige porteuse (2), de sorte que le guide d'ondes lumineuses (3) s'étend parallèle et centré par rapport à la tige porteuse (2).

4. Détecteur selon l'une des revendications précédentes, **caractérisé en ce que** la tige porteuse (2) est flexible.
